(19) Europäisches Patentamt
European Patent Office
Office européen des brevets

(11) **EP 1 733 333 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*G06K 9/00* (2006.01)    *G06F 19/00* (2006.01)
*G06K 9/62* (2006.01)

(21) Anmeldenummer: **04762675.9**

(22) Anmeldetag: **16.08.2004**

(86) Internationale Anmeldenummer:
**PCT/DE2004/001831**

(87) Internationale Veröffentlichungsnummer:
**WO 2005/101291 (27.10.2005 Gazette 2005/43)**

(54) **VERFAHREN ZUR AKQUISITION VON FORMEN AUS HEP-2-ZELLSCHNITTEN UND ZUM FALLBASIERTEN ERKENNEN VON HEP-2-ZELLEN**

METHODS FOR ACQUIRING SHAPES FROM HEP-2 CELL SECTIONS AND THE CASE-BASED RECOGNITION OF HEP-2 CELLS

PROCEDE D'ACQUISITION DE FORMES A PARTIR DE COUPES DE CELLULES HEP-2 ET DE RECONNAISSANCE PAR CAS DE CELLULES HEP-2

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.04.2004 DE 102004018172**
**08.04.2004 DE 102004018175**

(43) Veröffentlichungstag der Anmeldung:
**20.12.2006 Patentblatt 2006/51**

(73) Patentinhaber: **Perner, Petra**
**04275 Leipzig (DE)**

(72) Erfinder: **Perner, Petra**
**04275 Leipzig (DE)**

(74) Vertreter: **Krause, Wolfgang**
**Am Schweizerwald 1**
**09648 Mittweida (DE)**

(56) Entgegenhaltungen:
**EP-A- 0 665 507        US-A1- 2003 171 873**

- **PERNER P: "Image mining: issues, framework, a generic tool and its application to medical-image diagnosis" ENGINEERING APPLICATIONS OF ARTIFICIAL INTELLIGENCE ELSEVIER UK, Bd. 15, Nr. 2, April 2002 (2002-04), Seiten 205-216, XP002308335 ISSN: 0952-1976**
- **GDALYAHU Y ET AL: "FLEXIBLE SYNTACTIC MATCHING OF CURVES AND ITS APPLICATION TO AUTOMATIC HIERARCHICAL CLASSIFICATION OF SILHOUETTES" IEEE TRANSACTIONS ON PATTERN ANALYSIS AND MACHINE INTELLIGENCE, IEEE INC. NEW YORK, US, Bd. 21, Nr. 12, Dezember 1999 (1999-12), Seiten 1312-1328, XP000931864 ISSN: 0162-8828**
- **PERNER P: "Are case-based reasoning and dissimilarity-based classification two sides of the same coin?" ENGINEERING APPLICATIONS OF ARTIFICIAL INTELLIGENCE ELSEVIER UK, Bd. 15, Nr. 2, April 2002 (2002-04), Seiten 193-203, XP002308336 ISSN: 0952-1976**

EP 1 733 333 B1

**Beschreibung**

Die Erfindung betrifft Verfahren zur Akquisition von Formen aus Bildern mit Abbildungen von HEp-2-Zellschnitten als Objekte und zum Lernen von abstrakten Formmodellen aus Abbildungen von HEp-2-Zellschnitten für eine Falldatenbank für ein fallbasiertes Erkennen von HEp-2-Zellen in digitalen Bildern, Verfahren zur Akquisition von Formen aus Bildern mit Abbildungen von HEp-2-Zellschnitten als Fälle und zum fallbasierten Erkennen von HEp-2-Zellen als Objekte in digitalen Bildern, Computer-Programme mit einem Programmcode zur Durchführung dieser Verfahren und Computer-Programm-Produkte auf maschinenlesbaren Trägern zur Durchführung dieser Verfahren.

Anordnungen zur automatischen Untersuchung von Zellen, Zellkomplexen und anderen biologischen Proben sind unter anderem durch die DE 196 16 997 A1 (Verfahren zur automatisierten mikroskopunterstützten Untersuchung von Gewebeproben oder Körperflüssigkeitsproben), DE 42 11 904 A1 (Verfahren und Vorrichtung zum Erstellen einer Artenliste für eine flüssige Probe) und DE 196 39 884 A1 (Mustererkennungssystem) bekannt.

In der DE 196 16 997 A1 werden über die Anwendung von Neuronalen Netzen Gewebeproben oder Körperflüssigkeitsproben auf Zelltypen untersucht.

Kleinstlebewesen wie Würmer, Insekten oder Schnecken werden in der DE 42 11 904 A1 erfaßt und identifiziert. Die Identifikation erfolgt über einen Vergleich mit in einem Referenzobjektspeicher enthaltenen Objekten. Gleichzeitig werden die identifizierten Objekte gezählt und in eine Artenliste eingetragen.

In der DE 196 39 884 A1 werden feste Bestandteile in einer Probenströmung nach ihrer Größe insbesondere entsprechend ihrer Projektionslänge im Bild entlang der X- und der Y-Achse, ihres Umfangs und ihrer mittleren Farbdichte erfaßt.

Die Diagnostik mittels Immunfluoreszenz nach dem Prinzip des fluoreszenzoptischen Nachweises von Autoantikörper-Bindung wird an Gefrierschnitten von HEp-2-Zellen durchgeführt. Diese Methode liefert die verläßlichsten Ergebnisse und stellt eine sichere Grundlage für therapeutische Entscheidungen dar.

Nachteilig ist die bisher fehlende Automatisierbarkeit, so daß ein hoher Personalaufwand verbunden mit einer gesundheitlich belastenden, zeitaufwendigen und viel Erfahrung erfordernden Auswertung notwendig ist.

Ein automatisches Verfahren ist durch die DE 198 01 400 C2 (Verfahren und Anordnung zur automatischen Erkennung, Eigenschaftsbeschreibung und Interpretation von HEp-2-Zellmustern) bekannt. Dabei werden nur die Formen in den Bildern erkannt. Automatisierte Rückschlüsse auf weitere Fälle ist nicht vorgesehen.

Durch PERNER P: "Image mining: issues, framework, a general tool and its application to medical-image diagnosis" ENGINEERING APPLICATIONS OF ARTIFICIAL INTELLIGENCE ELSEVIER UK, Bd. 15, Nr. 2, April 2002 (2002-04), Seiten 205-216 ist ein Verfahren zur Akquisition von Formen aus Bildern mit Abbildungen von Hep-2-Zellschnitten als Objekte und zum Lernen eines Entscheidungsbaumes für eine Falldatenbank für ein fallbasiertes Erkennen von HEp-2-Zellen in digitalen Bildern bekannt, wobei jedem Bild durch manuelles Abfahren von Kanten eines Bildes in Form von sichtbaren äusserer und/oder innerer Konturen von HEp-2-Zellen mit einem handführbaren und mit einem mit einem Computer verbundenen Eingabegerät diesen Kanten und damit dargestellten HEp-2-Zellen als Objekte zuordenbare Daten gewonnen werden. Aus diesen Daten wird ein Entscheidungsbaum durch rekursive Aufteilung des Merkmalsraums erzeugt.

Weiterhin ist durch GDALYAHU Y ET AL: Flexible Syntactic Matching of Curves and Its Application to Automatic Hierarchical Classification of Silhouettes" IEEE TRANSACTIONS ON PATTERN ANALYSIS ANS MACJ'HINE INTELLIGENCE; IEEE INC. NEW YORK, US, Bd. 21, Nr. 12, Dezember 1999 (1999-12), Seiten 1312-1328 bekannt, Formen nach Ähnlichkeit oder Distanz als ein Dendogramm zur Gruppierung von Merkmalsvektoren aller Art zu organisieren. Darüber hinaus wird offenbart, dass beim Formenvergleich die Rotation berücksichtigt wird.

Durch die EP 0 665 507 A1 (Position and orientation estimation neural network system and method) ist ein Mustervergleich durch wiederholte Rotation bekannt.

Der in den Patentansprüchen 1, 4, 17 und 18 angegebenen Erfindung liegt die Aufgabe zugrunde, sowohl abstrakte Formmodelle aus in Bildern dargestellten HEp-2-Zellschnitten für eine Falldatenbank zu gewinnen als auch aus digitalen Bildern mit Objekten automatisch Objekte durch Vergleich mit Fällen bestimmen zu können.

Diese Aufgabe wird mit den in den Patentansprüchen 1, 4, 17 und 18 aufgeführten Merkmalen gelöst.

Die Verfahren zur Akquisition von Formen aus Bildern mit Abbildungen von HEp-2-Zellschnitten mit HEp-2-Zellen als Objekte und zum Lernen von abstrakten Formmodellen von HEp-2-Zellen für eine Falldatenbank für ein fallbasiertes Erkennen von HEp-2-Zellen in digitalen Bildern zeichnen sich insbesondere dadurch aus, dass semiautomatisch Einzelformen von HEp-2-Zellschnitten als Objekte in Form von Darstellungen in Bildern erhoben und dass automatisch aus diesen Einzelformen abstrakte Formmodelle in verschiedenen Abstraktionsniveaus gewonnen werden können. Die gelernten abstrakten Formmodelle sind entweder gemittelte Formen aus Gruppen von Objekten oder Mediane als Einzelformen von Gruppen von HEp-2-Zellen. Der Median ist das Objekt, von dem alle anderen Objekte den geringsten Abstand haben. Der Median stellt damit eine natürliche Form einer HEp-2-Zelle dar, während die gemittelte Form ein künstliches nicht vorkommendes Objekt ist.

Der besondere Vorteil besteht darin, dass die Kontur oder die Form digital erfasst und in einem Datenfile abgelegt werden können. Mit diesen Daten können folgend Manipulationen ausgeführt werden, wobei zum Beispiel Ähnlichkeitsmaße bestimmbar und die Ähnlichkeit beschreibbar ist.

Damit eignen sich diese Verfahren für das Erstellen von Falldatenbanken mit Formmodellen von HEp-2-Zellen. Es können vorteilhafterweise Gruppen von Formen von HEp-2-Zellen automatisch gebildet und die Ähnlichkeiten untereinander hierarchisch dargestellt werden. Aus den Gruppen können weiterhin Modelle auf verschiedenen Abstraktionsebenen erstellt werden.

Grundlage sind digitale Bilder mit Abbildungen von HEp-2-Zellschnitten mit unterschiedlichen Erscheinungsformen in der Kontur und/oder Textur. Durch ein manuelles Abfahren von Konturen und/oder Texturen bildenden Kanten eines Bildes mit einem handführbaren und mit einem Computer verbundenen Eingabegerät werden diesen Kanten und damit dargestellten HEp-2-Zellen als Objekte zuordenbare Daten gewonnen. Aus diesen Daten können Formmodelle gewonnen werden, um Wissen über die Objekte akquirieren zu können. Dadurch kann vorteilhafterweise die Falldatenbank erweitert werden.

Dabei werden jeweils mindestens zwei HEp-2-Zellen miteinander verglichen, wobei diese aufeinander ausgerichtet werden und eine Skalierung und/oder Rotation erfolgt. Vorteilhafterweise wird dabei gleichzeitig die Ähnlichkeit berechnet, wobei Ähnlichkeitsmaße entweder als Distanz- oder als Ähnlichkeitswerte jeweils zwischen den Objekten so lange ermittelt werden, bis entweder ein Minimum der Distanzwerte oder ein Maximum der Ähnlichkeitswerte vorhanden ist. Es können sowohl Gruppen mit ähnlichen Formmodellen von HEp-2-Zellen gelernt als auch ähnliche Gruppen von HEp-2-Zellen zusammengelegt werden, wobei Ähnlichkeitsrelationen als Vergleich zwischen diesen Gruppen erstellbar sind. Ein weiterer Vorteil besteht darin, dass mit der Anwendung des Verfahrens ständig auch neue Formmodelle von HEp-2-Zellen aus HEp-2-Zellschnitten als Objekte in digitalen Bildern der Falldatenbank zugeordnet werden können. Damit ist eine Erweiterung der Falldatenbank gegeben.

Damit kann eine Falldatenbank zur automatischen Erkennung, Eigenschaftsbeschreibung und Interpretation von HEp-2-Zellen in HEp-2-Zellschnitten erstellt werden, die dem Nachweis von Autoimmunerkrankungen dienen. Autoimmunkrankheiten sind Krankheiten, die durch eine Reaktivität des Immunsystems gegen körpereigene Substanzen und Strukturen gekennzeichnet sind. Eine häufige Erscheinung bei Autoimmunkrankheiten ist das Auftreten von Autoantikörpern. Dabei handelt es sich um Immunglobuline, die gegen körpereigene Strukturen gerichtet sind. Neben organspezifischen Autoantikörpern sind besonders nichtorganspezifische mit Reaktivität gegen zelluläre Strukturen bedeutsam. Der Nachweis solcher Autoantikörper hat große diagnostische Bedeutung.

Zur Charakterisierung der Spezifität von Autoantikörpern wird untersucht, gegen welche Zielantigene sie gerichtet sind. Das ist mit mehreren Methoden möglich. Eine davon ist die Diagnostik mittels Immunfluoreszenz. Diese wird an HEp-2-Zellen durchgeführt, wobei die verläßlichsten Ergebnisse erzielt werden. Gleichzeitig stellt sie eine sichere Grundlage für therapeutische Entscheidungen dar.

Die Falldatenbank zur automatischen Erkennung, Eigenschaftsbeschreibung und Interpretation von HEp-2-Zellen in HEp-2-Zellschnitten werden für den Nachweis von Autoimmunerkrankungen eingesetzt. Autoimmunkrankheiten sind Krankheiten, die durch eine Reaktivität des Immunsystems gegen körpereigene Substanzen und Strukturen gekennzeichnet sind. Eine häufige Erscheinung bei Autoimmunkrankheiten ist das Auftreten von Autoantikörpern. Dabei handelt es sich um Immunglobuline, die gegen körpereigene Strukturen gerichtet sind. Neben organspezifischen Autoantikörpern sind besonders nichtorganspezifische mit Reaktivität gegen zelluläre Strukturen bedeutsam. Der Nachweis solcher Autoantikörper hat große diagnostische Bedeutung.

Zur Charakterisierung der Spezifität von Autoantikörpern wird untersucht, gegen welche Zielantigene sie gerichtet sind. Das ist mit mehreren Methoden möglich. Eine davon ist die Diagnostik mittels Immunfluoreszenz. Diese wird an HEp-2-Zellen durchgeführt, wobei die verlässlichsten Ergebnisse erzielt werden. Gleichzeitig stellt sie eine sichere Grundlage für therapeutische Entscheidungen dar.

Die Falldatenbanken bilden damit die Grundlage zum automatischen fallbasierten Erkennen und Bestimmen von HEp-2-Zellen in HEp-2-Zellschnitten als Objekte in digitalen Bildern mit Objekten.

Das ausgewählte Fallbild und das erzeugte Gradientenbild des digitalen Bildes mit Objekten werden in Pyramiden mit Bildebenen überführt. Die einzelnen Bildebenen werden nacheinander miteinander verglichen, wobei mit den höchsten Bildebenen begonnen wird. Die höchsten Bildebenen sind die unschärfsten Bildebenen mit jeweils der geringsten Datenmenge, so dass beginnend mit dem geringsten Rechenaufwand der Vergleich durchgeführt wird. Weiterhin wird das ausgewählte Fallbild mit jedem Objekt des digitalen Bildes mit Objekten sukzessive verglichen. Während des Vergleichs zwischen jedem der Objektbilder und des Fallbildes erfolgt eine Ausrichtung und eine Skalierung und/oder Rotation des Fallbildes, wobei dabei gleichzeitig die Ähnlichkeit berechnet wird.

Der besondere Vorteil besteht darin, dass entweder die Kontur oder die Form digital erfasst und in einem Datenfile abgelegt werden können. Mit diesen Daten können folgend Manipulationen ausgeführt werden, wobei zum Beispiel Ähnlichkeitsmaße bestimmbar und die Ähnlichkeit und/oder die Ähnlichkeit als Grad der Übereinstimmung zwischen Fall- und Objektbild durch das Ähnlichkeitsmaß beschreibbar sind. Mit sinkendem Ähnlichkeitsmaß ist das Objektbild ungleicher vom Fallbild.

Die erfindungsgemäßen Verfahren können den Nutzern vorteilhafterweise als Computer-Programm mit jeweils einem Programmcode zur Durchführung dieser Verfahren und als Computer-Programm-Produkte auf maschinenlesbaren Trägem zur Durchführung dieser Verfahren zur Verfügung gestellt werden.

Vorteilhafte Ausgestaltungen der Erfindung sind in den Patentansprüchen 2, 3 und 5 bis 16 angegeben. Vorteilhafterweise spannen nach der Weiterbildung des Patentanspruchs 2 die Distanz- oder die Ähnlichkeitswerte eine Distanz- oder Ähnlichkeitsmatrix auf.

Die Distanz- oder die Ähnlichkeitswerte werden vorteilhafterweise nach der Weiterbildung des Patentanspruchs 3 mittels des Single-Linkage-Verfahrens und einem Dendogramm hierarchisch dargestellt.

Nach der Weiterbildung des Patentanspruchs 5 werden jeweils mindestens zwei Fälle miteinander verglichen, wobei die Fälle aufeinander ausgerichtet werden und eine Skalierung und/oder Rotation erfolgt. Vorteilhafterweise wird dabei gleichzeitig die Ähnlichkeit berechnet, wobei Ähnlichkeitsmaße entweder als Distanz- oder als Ähnlichkeitswerte jeweils zwischen den Fällen so lange ermittelt werden, bis entweder ein Minimum der Distanzwerte oder ein Maximum der Ähnlichkeitswerte vorhanden ist.

Vorteilhafterweise wird nach der Weiterbildung des Patentanspruchs 6 das Dendrogramm auf der Ähnlichkeitsskala entsprechend entweder festgelegter und damit automatisch oder nutzerspezifischer Schwellen wenigstens einmal geschnitten, so dass Gruppen entstehen. Den Gruppen werden die Einzelformen zugeordnet und in den Gruppen wird jeweils ein Prototyp gewählt, wobei der Prototyp entweder eine aus den Einzelformen der Gruppe gemittelte Form oder der Median der Gruppe der Einzelformen ist. Damit ist eine visuelle Kontrolle der einzelnen Gruppen und/oder der einzelnen Objekte gegeben. Die gemittelte Form oder der Median der Gruppe wird sowohl auf dem Datensichtgerät abgebildet als auch dessen Konturpunkte als Datenmenge im Computer gespeichert.

Nach der Weiterbildung des Patentanspruchs 7 erfolgt vorteilhafterweise eine Reduzierung der mit dem Abfahren der Kanten gewonnenen Daten und damit der Punkte als den sichtbaren äußeren und/oder inneren Konturen durch Interpolation mit einem Polynom.

Die den abgefahrenen Kanten zugeordneten Fälle werden vorteilhafterweise nach der Weiterbildung des Patentanspruchs 8 so transformiert, dass jeweils der Mittelpunkt eines Falles dem Koordinatenursprung 0, 0 entspricht. Die Fälle werden jeweils in einem Koordinatensystem ausgerichtet, so dass ein Vergleich in ihren Ähnlichkeiten zueinander leicht möglich ist.

Die Berechnung der Ähnlichkeiten basiert auf der Bestimmung von Ähnlichkeitsmaßen. Dabei werden jeweils mindestens ein Fall und ein Objekt miteinander verglichen, wobei diese aufeinander ausgerichtet werden und eine Skalierung und/oder Rotation erfolgt. Gleichzeitig wird die Ähnlichkeit berechnet, wobei nach der Weiterbildung des Patentanspruchs 9 Ähnlichkeitsmaße entweder als Distanz- oder als Ähnlichkeitswerte jeweils zwischen dem Fall und dem Objekt so lange ermittelt werden, bis entweder ein Minimum der Distanzwerte oder ein Maximum der Ähnlichkeitswerte vorhanden ist.

Vorteilhafterweise wird über eine Kantendetektion der Objekte des digitalen Bildes nach der Weiterbildung des Patentanspruchs 10 das Gradientenbild erzeugt, wobei große Änderungen des Grauwertes sowohl in vertikaler als auch in horizontaler Richtung jeweils Gradienten und homogenen Flächen kein Gradient zugeordnet werden. Die homogenen Flächen sind schwarz. Ergebnis ist ein Bild mit weißen Kanten der Objekte, während die durch die Kanten der Objekte eingeschlossenen Flächen und die an die Kanten der Objekte angrenzenden Flächen schwarz sind. Die Datenmenge des digitalen Bildes ist dadurch wesentlich geringer als bei einem Grauwertbild des digitalen Bildes. Gleichzeitig verringert sich der Rechenaufwand beim Vergleich jedes Objektes mit einem ausgesuchten Fall durch die Berechnung der Ähnlichkeiten mit der Bestimmung von Ähnlichkeitsmaßen. Weiterhin sind auch übereinanderliegende und sich teilweise überdeckende Objekte im digitalen Bild mit einem Vergleich eines ausgesuchten Falles leichter bestimmbar.

Sowohl aus dem Fall- als auch dem Objektbild wird nach der Weiterbildung des Patentanspruchs 11 jeweils ein Gradientenbild gebildet, die jeweils in eine Bildfolge als eine Pyramide mit Bildebenen überführt und wobei sukzessive die Richtungsvektoren in den Bildebenen jeweils des Fall- und des Objektbildes durch Produktbildung miteinander verglichen werden. Das Prinzip der Pyramiden verringert den Rechenaufwand wesentlich. Die jeweils nachfolgenden Bildebenen der Pyramiden sind Darstellungen mit jeweils einem doppelt so groben Raster. Dazu wird nur jeder zweiter Punkt einer Zeile und nur jede zweite Zeile herausgegriffen und zu einem Neuen Bild als Bildebene zusammengesetzt. Das verwendete Abtasttheorem stellt zugleich sicher, dass das ursprünglich feinere Raster aus dem gröberen Raster exakt rekonstruierbar ist. Bei einem Vergleich des Falles und des Objektes wird vorteilhafterweise mit dem gröbsten Raster der obersten Bildebenen begonnen. Je nach dem Ergebnis des Vergleichs der Ähnlichkeit werden sukzessive Bildebenen mit dem jeweils feineren Raster miteinander verglichen. Der Vergleich kann jederzeit abgebrochen werden, so dass der Rechenaufwand beim Vergleich wesentlich eingeschränkt werden kann.

Eine vorteilhafte Einteilung von Einzelfällen stellt nach der Weiterbildung des Patentanspruchs 12 ein Dendrogramm dar, wobei Gruppen von Einzelfällen hierarchisch geordnet sind. Das Fallbild ist dabei ein Prototyp einer Gruppe von Einzelfällen, wobei die Gruppen Mengen ähnlicher Einzelfälle mit bestimmten Distanz- oder Ähnlichkeitswerten sind. Der ähnlichste Fall bestimmt den Zweig des Dendrogramms mit ähnlichen Fällen zur Bestimmung des Objektes. Der Prototyp ist entweder eine aus den Einzelformen der Gruppe gemittelte Form oder der Median der Gruppe der Einzelformen. Der Median ist der Fall, von dem alle anderen Fälle den geringsten Abstand haben. Der Median stellt damit eine natürliche HEp-2-Zelle dar, während die gemittelte Form eine künstliche HEp-2-Zelle ist. Das Fallbild kann aber auch ein Einzelbild eines Objektes sein.

Über die Ermittlung des Richtungsvektors zwischen entweder zwei Punkten oder benachbarten Punkten der Kanten entweder bei dem Fall- oder bei dem Objektbild nach der Weiterbildung des Patentanspruchs 13 wird die Richtung der Kante als lokale Orientierung bestimmt, so dass die Komponenten des Verlaufs der Richtung der lokalen Orientierung und der Ausprägung gemessen zum Beispiel an der Höhe oder der Steigung der Kante in die Beschreibung der Kante mit einfließen. Dadurch wird vorteilhafterweise auch die Umgebung der vorhandenen komplexen Struktur der Bildinformation bei der Berechnung der Ähnlichkeit mit einbezogen. Die Ähnlichkeitsmaße bei der Berechnung der Ähnlichkeit werden damit als sowohl Richtungsvektoren als auch entweder als Distanz- oder als Ähnlichkeitswerte jeweils zwischen dem Fallbild und dem Objektbild ermittelt. Weitere Informationen des digitalen Bildes werden damit vorteilhafterweise bei dem Vergleich durch die Berechnung der Ähnlichkeit mit berücksichtigt.

Über einen Index sind nach der Weiterbildung des Patentanspruchs 14 entweder die Prototypen oder die Fälle entsprechend der Ähnlichkeitsrelationen in der Falldatenbank geordnet. Der Index kennzeichnet ein Indexregister mit den Prototypen und/oder den Fällen einzeln oder in Gruppen womit aus einer Menge von Prototypen und/oder Fällen der ähnlichste Prototyp oder Fall schnell zum Objekt im Bild gefunden werden kann.

Die Berechnung der Ähnlichkeit erfolgt vorteilhafterweise nach der Formel der Weiterbildung des Patentanspruchs 15.

Die Weiterbildung des Patentanspruchs 16 führt vorteilhafterweise dazu, dass ein ungleiches Objekt als Fall manuell bestimmbar ist und dem Dendrogramm mit den bestimmten Fällen zugeordnet werden kann. Damit kann die Falldatenbank ständig erweitert werden.

Ausführungsbeispiele der Erfindung werden im folgenden unter Einbeziehung der Darstellungen näher beschrieben.

Es zeigen:

Fig. 1    eine Darstellung mit gelabelten und approximierten Konturen von geschnittenen HEp-2-Zellen,

Fig. 2    die Abbildung mit nummerierten Darstellungen der geschnittenen Hep-2-Zellen der Fig. 1 und

Fig. 3    ein Dendrogramm dieser HEp-2-Zellen.

Ein Verfahren zur Akquisition von Formen aus digitalen Bildern von HEp-2-Zellschnitten 1 bis 8 mit HEp-2-Zellen als Objekte und zum Lernen von abstrakten Formmodellen von HEp-2-Zellen für eine Falldatenbank für ein fallbasiertes Erkennen von Hep-2-Zellen in digitalen Bildern wird als ein Beispiel der Erfindung in einem ersten Ausführungsbeispiel näher ausgeführt. HEp steht dabei für Human Epithel. Auf einem Datensichtgerät in Form eines bekannten mit einem Rechner zum Beispiel als Computer zusammengeschalteten Bildschirmes wird ein digitales Bild eines Hep-2-Zellschnitts (1 bis 8) dargestellt, deren Konturen unterschiedlich sein können.

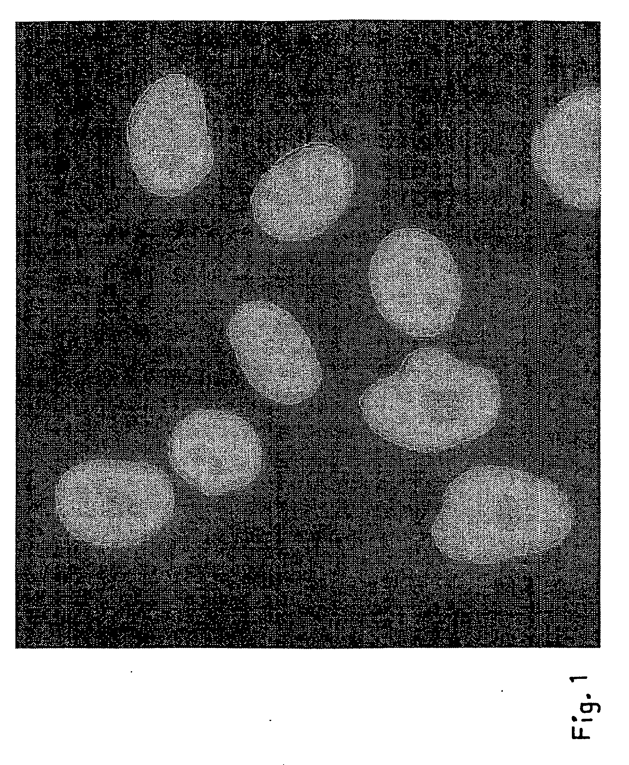

Die Fig. 1 zeigt eine Darstellung mit gelabelten und approximierten Konturen von geschnittenen HEp-2-Zellen.

Durch ein manuelles Abfahren von Kanten des digitalen Bildes mit einem handführbaren Eingabegerät im Zusammenhang mit dem Datensichtgerät werden den abgefahrenen Kanten zuordenbare Daten gewonnen. Kanten sind dabei sichtbare äußere und/oder innere Konturen abgebildeter geschnittener HEp-2-Zellen als Objekte. Mit dem handführbaren Eingabegeräten als der mit einer Tastatur oder einer Maus geführte Cursor des Bildschirms, ein Lichtstift mit einem Photodetektor, ein Scanner und/oder ein Stift und Scanner, werden zusammen mit dem Datensichtgerät Daten der Konturpunkte als x-, y-Koordinaten und/oder Grau- oder Farbwerte der Konturpunkte jeweils als Kanten von HEp-2-Zellen als Objekte zuordenbare Daten gewonnen. Eine weitere Ausführungsform ist durch eine Kombination eines Stiftes in Verbindung mit einem Berührungsbildschirm gegeben. Derartige Eingabegeräte und die Verfahren zur Gewinnung der damit Kanten zuordenbaren Daten sind bekannt, so dass sich eine nähere Erläuterung erübrigt.

Das Abfahren der Konturen erfolgt manuell mit dem handführbaren Eingabegerät von auf einem Datensichtgerät dargestelltem digitalem Bild. Die abgefahrenen Konturen können auch gelabelt mit dem Datensichtgerät dargestellt werden, wobei das wenigstens teilweise durch die abgefahrene Kontur und/oder Kante auf dem Datensichtgerät als Gebiet dargestellt wird. Dadurch ist eine leichte Kontrolle der abgefahrenen Kanten auf dem Datensichtgerät möglich. Fehler hervorgerufen durch zum Beispiel mangelnde Konzentration, Störungen, Ablenkungen oder Ermüdung der die Konturen und/oder Kanten der Fälle abfahrenden Personen werden vermieden.

Jedes der durch Kanten bestimmten HEp-2-Zellen als Objekte wird in einem Koordinatensystem skaliert, wobei jeweils der Mittelpunkt des Objektes dem Koordinatenursprung $x = 0$ und $y = 0$ entspricht.

Die Ähnlichkeit von geschnittenen HEp-2-Zellen wird jeweils durch aneinander paarweises Ausrichten so bestimmt, bis sich das Ähnlichkeitsmaß nicht mehr ändert. Es wird eine Skalierung und/oder Rotation ausgeführt, wobei gleichzeitig die Ähnlichkeit berechnet wird. Während der Berechnung der Ähnlichkeit werden die Ähnlichkeitsmaße entweder als Distanzwerte oder als Ähnlichkeitswerte jeweils zwischen den Objekten so lange ermittelt, bis entweder ein Minimum der Distanzwerte oder ein Maximum der Ähnlichkeitswerte vorhanden ist. Die Berechnung der Ähnlichkeit erfolgt mit

$$D\,(P,O) = \sum_{i=1}^{N} \left| \frac{(p_i-\mu_p)}{\delta_p} - R\,(\Theta) \frac{(o_i-\mu_o)}{\delta_o} \right|^2 ,$$

wobei

P und O - die Objekte,

$\Theta$ - die Rotationsmatrix,

$\mu_p$ und $\mu_o$ - die Mittelpunkte der Objekte P und O und

$\delta_p$ und $\delta_o$ - Summen der Quadrate der Abstände jedes Punktes von den Mittelpunkten sind.

Die Distanz- oder die Ähnlichkeitswerte spannen eine Distanz- oder Ähnlichkeitsmatrix auf.

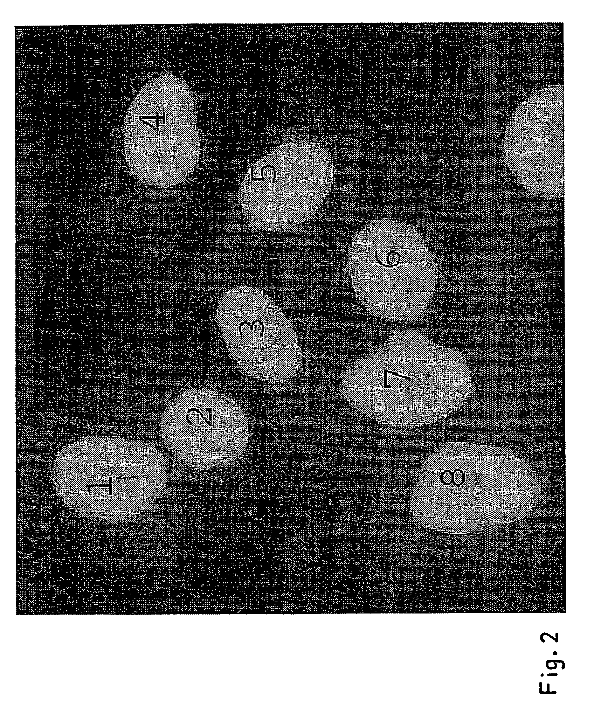

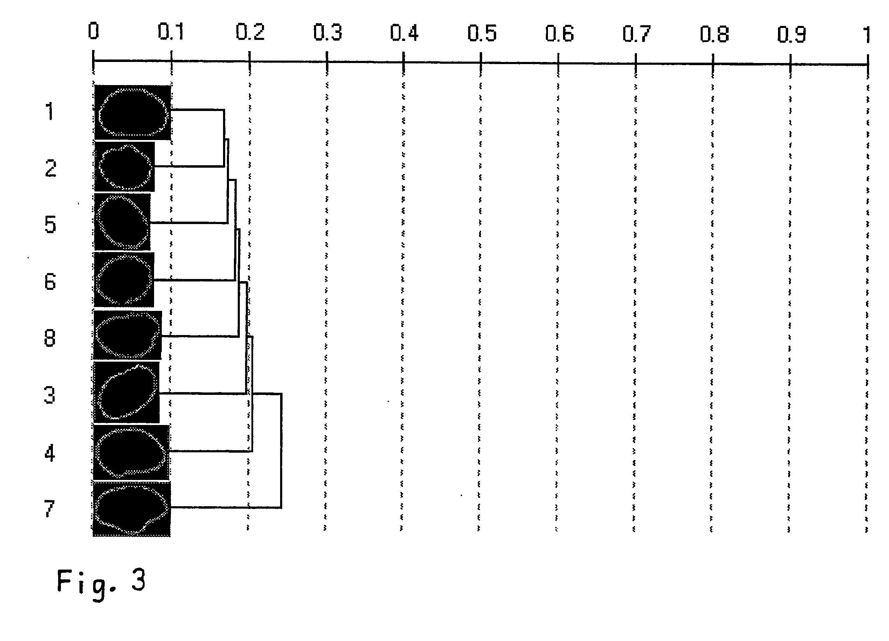

Aus den bestimmten Ähnlichkeitswerten werden Mengen ähnlicher Objekte gebildet und hierarchisch als Dendrogramm geordnet. Die Fig. 2 zeigt nummerierte Darstellungen der geschnittenen HEp-2-Zellen der Fig. 1. Das Dendrogramm wird auf der Ähnlichkeitsskala entsprechend entweder festgelegter oder nutzerspezifischer Schwellen geschnitten, so dass Gruppen entstehen. Bei festgelegten Schwellen wird das Dendrogramm automatisch geschnitten. Den Gruppen werden die Einzelformen zugeordnet und in den Gruppen jeweils ein Prototyp gewählt. Der Prototyp ist entweder eine aus den Einzelformen der Gruppe gemittelte Form oder der Median der Gruppe der Einzelformen. Der Prototyp der Gruppe wird auf dem Datensichtgerät abgebildet und die Konturpunkte des Prototypen werden als Datenmenge im Computer gespeichert. Die Fig. 3 zeigt ein Dendogramm dieses Hep-2-Zellschnitts 1 bis 8.

Dieses Verfahren wird auf weitere digitale Bilder angewandt, so dass eine Falldatenbank mit Formmodellen als Prototypen mit gemittelten Formen von Gruppen von Einzelformen und/oder mit Medianen von Gruppen von Einzelformen entstehen.

In einer Ausführungsform des Ausführungsbeispiels werden die durch die Eingabegeräte im Zusammenhang mit dem Datensichtgerät gewonnenen Daten von Kanten sichtbarer äußerer und/oder innerer Konturen im digitalen Bild durch eine Interpolation reduziert. Bei dieser Interpolation wird

- in einem ersten Schritt einem ersten durch das Koordinatensystem bestimmten und damit skalierten Punkt einer Kante des Objektes der Ausgangspunkt zugeordnet,
- in einem zweiten Schritt eine virtuelle Linie zu einem benachbarten Punkt als zweiten Punkt gezogen,
- in einem dritten Schritt der Abstand zwischen dieser virtuellen Linie und dem korrespondierenden Segment der Kontur eines Vorläuferobjektes ermittelt,
- in einem viertem Schritt dieser Abstand als Wert mit einem vorgegebenen Wert verglichen und
- in einem fünften Schritt dem zweiten Punkt der Ausgangspunkt für eine virtuelle Linie zum nächsten Punkt zugeordnet.

Die Schritte drei, vier und fünf werden über die gesamte Kontur des Objektes wiederholt.

Die Distanz- oder die Ähnlichkeitswerte können vorteilhafterweise in einer weiteren Ausführungsform mittels des Single-Linkage-Verfahrens und einem Dendrogramm hierarchisch dargestellt werden.

Ein Verfahren zur Akquisition von Formen aus digitalen Bildern von HEp-2-Zellschnitten 1 bis 8 mit HEp-2-Zellen als Objekte und zum Lernen von abstrakten Formmodellen von HEp-2-Zellen wird als ein Beispiel der Erfindung in einem zweiten Ausführungsbeispiel näher ausgeführt.

Die Falldatenbank mit Fällen als Fallbilder, die durch ein Verfahren zur Akquisition von Formen aus digitalen Bildern von Hep-2-Zellschnitten 1 bis 8 mit HEp-2-Zellen als Objekte und zum Lernen von abstrakten Formmodellen von HEp-2-Zellen des ersten Ausführungsbeispiels, bilden die Grundlage zum fallbasierten Erkennen von Hep-2-Zellen als Objekte in digitalen Bildern mit Objekten.

Aus der Falldatenbank wird ein Fallbild mit einer Fallbeschreibung ausgewählt wird. Das Fallbild ist entweder ein Prototyp einer Gruppe von Einzelfällen oder ein Einzelbild eines Falles. Die Gruppe von Einzelfällen stellen Mengen ähnlicher Einzelfälle mit bestimmten Distanz- oder Ähnlichkeitswerten dar, die hierarchisch als Dendrogramm geordnet sind. Der ähnlichste Fall bestimmt den Zweig des Dendrogramms. Der Prototyp selbst ist entweder eine aus den Einzelformen der Gruppe gemittelte Form oder der Median der Gruppe der Einzelformen. Das Fallbild wird in eine Bildfolge als eine Pyramide mit Bildebenen des Fallbildes gewandelt. Eine Bildfolge als eine Pyramide mit Bildebenen verhindert ein explosionsartiges Anwachsen des Rechenaufwands. Das Fallbild ist durch Anwenden von Glättungsoperationen, wobei alle Wellenzahlen unter der halben Grenzwellenzahl bleiben, und aufgrund des Abtasttheorems nacheinander auf einem doppelt so groben Raster ohne jeglichen Informationsverlust darstellbar. Dabei wird nur jeder zweiter Punkt einer Zeile und nur jede zweite Zeile herausgegriffen und zu einem neuen Bild zusammengesetzt, wobei sichergestellt ist, dass das ursprünglich feinere Raster aus dem gröberen Raster exakt rekonstruierbar ist. Die Anwendung der Glättungoperationen erfolgt iterativ, so dass daraus eine Folge von Bildern resultiert, wobei die Bilder flächenmäßig jeweils um den Faktor vier kleiner werden. Die immer kleiner werdenden Bildebenen ergeben übereinandergeschichtet die Form einer. Pyramide.

Aus dem aktuellen digitalen Bild mit geschnittenen HEp-2-Zellen als Objekte wird ein Gradientenbild gebildet. Über eine Kantendetektion der Objekte des digitalen Bildes mit Objekten wird das Gradientenbild erzeugt, wobei große Änderungen des Grauwertes sowohl in vertikaler als auch in horizontaler Richtung jeweils Gradienten und homogenen Flächen kein Gradient zugeordnet werden. Die homogenen Flächen sind damit schwarz.

Das Gradientenbild wird gleichfalls in eine Bildfolge als eine Pyramide mit Bildebenen überführt.

Das Fallbild wird nachfolgend sukzessive auf jedes Objektbild des Gradientenbildes beginnend mit jeweils den höchsten Bildebenen des Fall- und des Objektbildes verschoben, wobei das Fallbild mit jedem Objektbild des Gradientenbildes verglichen wird. Während des Vergleichs wird das Fallbild auf das Objektbild ausgerichtet, wobei dabei eine Skalierung und/oder Rotation des Fallbildes ausgeführt wird. Während des Vergleichs des Fallbildes mit dem Objektbild wird gleichzeitig die Ähnlichkeit zwischen dem Fall- und Objektbild berechnet. Bei der Berechnung der Ähnlichkeit werden die Ähnlichkeitsmaße entweder als Distanz- oder als Ähnlichkeitswerte jeweils zwischen dem Fall- und dem Objektbild so lange ermittelt, bis entweder ein Minimum der Distanzwerte oder ein Maximum der Ähnlichkeitswerte vorhanden ist. Die Ähnlichkeitsmaße bestimmen den Grad der Übereinstimmung zwischen Fall- und Objektbild, wobei der Grad der Übereinstimmung mit sinkendem Ähnlichkeitsmaß abnimmt und das Objektbild ungleicher vom Fallbild wird.

In einer weiteren Ausführungsform kann der Richtungsvektor zwischen entweder zwei Punkten oder benachbarten Punkten der Kanten entweder bei dem Fallbild berechnet sein oder bei dem Objektbild berechnet werden. Bei der Berechnung der Ähnlichkeit werden die Ähnlichkeitsmaße als sowohl Richtungsvektoren als auch entweder als Distanz- oder als Ähnlichkeitswerte jeweils zwischen dem Fallbild und dem Objektbild ermittelt.

Die HEp-2-Zellen als Fälle sind über einen Index entsprechend der Ähnlichkeitsrelationen so in der Falldatenbank geordnet, dass aus einer Menge entweder von Prototypen der ähnlichste Prototyp oder von Fällen der ähnlichste Fall schnell zum Objekt im Bild gefunden werden kann.

Der Prototyp als entweder gemittelte Form oder Median der Gruppe oder das Einzelbild wird auf einem mit einem Computer, in dem das Verfahren abläuft, verbundenen Datensichtgerät als Bildschirm abgebildet. Weiterhin werden die Konturpunkte entweder der gemittelten Form oder des Medians oder des Einzelbildes als Datenmenge in dem Computer gespeichert.

In einer weiteren Ausführungsform des Ausführungsbeispiels wird aus dem Fall- und dem Objektbild jeweils ein Gradientenbild gebildet. Diese Gradientenbilder werden jeweils in eine Bildfolge als eine Pyramide mit Bildebenen überführt und sukzessive die Richtungsvektoren in den Bildebenen jeweils des Fall- und des Objektbildes durch Produktbildung miteinander verglichen.

Ein drittes Ausführungsbeispiel ist ein Computer-Programm mit einem Programmcode zur Durchführung

- entweder eines im ersten Ausführungsbeispiel beschriebenen Verfahrens zur Akquisition von Formen aus digitalen Bildern mit Abbildungen von Hep-2-Zellschnitten 1 bis 8 und zum Lernen von abstrakten Formmodellen aus abgebildeten HEp-2-Zellen

- oder eines im zweiten Ausführungsbeispiel beschriebenen Verfahrens zur Akquisition von Formen aus Bildern mit Abbildungen von Hep-2-Zellschnitten 1 bis 8 als Fälle und zum fallbasierten Erkennen von HEp-2-Zellen als Objekte in digitalen Bildern, wenn das Programm auf einem Rechner abläuft.

Ein viertes Ausführungsbeispiel ist ein Computer-Programm-Produkt auf einem maschinenlesbaren Träger zur Durchführung

- entweder eines im ersten Ausführungsbeispiel beschriebenen Verfahrens zur Akquisition von Formen aus digitalen Bildern mit Abbildungen von HEp-2-Zellen und zum Lernen von abstrakten Formmodellen aus Abbildungen von Hep-2-Zellschnitten 1 bis 8

- oder eines im zweiten Ausführungsbeispiel beschriebenen Verfahrens zur Akquisition von Formen aus Bildern mit Abbildungen von Hep-2-Zellschnitten 1 bis 8 als Fälle und zum fallbasierten Erkennen von HEp-2-Zellen als Objekte in digitalen Bildern, wenn das Programm auf einem Rechner abläuft.

## Patentansprüche

1. Verfahren zur Akquisition von Formen aus Bildern mit Abbildungen von HEp-2-Zellschnitten als Objekte und zum Lernen von abstrakten Formmodellen aus Abbildungen von HEp-2-Zellschnitten für eine Falldatenbank für ein fallbasiertes Erkennen von HEp-2-Zellen in digitalen Bildern, wobei bei jedem Bild durch manuelles Abfahren von Kanten eines Bildes in Form sichtbarer äußerer und/oder innerer Konturen von HEp-2-Zellen mit einem handführbaren und mit einem Computer verbundenen Eingabegerät diesen Kanten und damit dargestellten HEp-2-Zellen als Objekte zuordenbare Daten gewonnen werden, **dadurch gekennzeichnet, dass** die Translation jedes Objektes so eliminiert wird, dass jedes Objekt in den Ursprung eines Koordinatensystems verschoben wird, dass jedes Objekt entsprechend der zugeordneten Daten in dem Koordinatensystem skaliert wird, dass jeweils mindestens zwei Objekte miteinander verglichen werden, dass die Objekte aufeinander ausgerichtet werden, wobei dabei eine Skalierung und/oder Rotation ausgeführt wird, dass dabei gleichzeitig die Ähnlichkeit berechnet wird, dass während der Berechnung der Ähnlichkeit die Ähnlichkeitsmaße entweder als Distanz- oder als Ähnlichkeitswerte jeweils zwischen den Objekten so lange ermittelt werden, bis entweder ein Minimum der Distanzwerte oder ein Maximum der Ähnlichkeitswerte vorhanden ist, dass aus den bestimmten Distanz- oder Ähnlichkeitswerten Mengen ähnlicher Objekte gebildet und hierarchisch als Dendrogramm geordnet werden und dass das Dendrogramm durch eine Vorgabe von Distanz- oder Ähnlichkeitswerten in Gruppen zerfällt und in den Gruppen jeweils ein Prototyp gewählt wird, wobei der Prototyp entweder eine aus den Einzelformen der Gruppe gemittelte Form oder der Median der Gruppe der Einzelformen ist.

**2.** Verfahren nach Patentanspruch 1, **dadurch gekennzeichnet, dass** die Distanz- oder die Ähnlichkeitswerte eine Distanz- oder eine Ähnlichkeitsmatrix aufspannen.

**3.** Verfahren nach Patentanspruch 1, **dadurch gekennzeichnet, dass** die Distanz- oder die Ähnlichkeitswerte mittels des Single-Linkage-Verfahrens und einem Dendrogramm hierarchisch dargestellt werden.

**4.** Verfahren zur Akqusition von Formen aus Bildern mit Abbildungen von HEp-2-Zellschnitten als Fälle und zum fallbasierten Erkennen von HEp-2-Zellen als Objekte in digitalen Bildern, wobei zum einen zur Akqusition von Formen aus Bildern mit Fällen und zum Lernen von abstrakten Formmodellen aus diesen Fällen für eine Falldatenbank bei jedem Bild mit Fällen durch manuelles Abfahren von Kanten eines Bildes in Form sichtbarer äußerer und/oder innerer Konturen mit einem handführbaren und mit einem Computer verbundenen Eingabegerät diesen Kanten und damit Fällen zuordenbare Daten gewonnen werden, **dadurch gekennzeichnet, dass** über eine Verschiebung und Skalierung jeden Falles jeweils mindestens zwei Fälle miteinander verglichen werden, die beiden Fälle aufeinander ausgerichtet werden und dabei gleichzeitig die Ähnlichkeit durch Ermittlung von Ähnlichkeitsmaßen berechnet wird, entsprechend der Ähnlichkeitsmaße Mengen ähnlicher Fälle gebildet und hierarchisch als Dendrogramm geordnet werden, das Dendrogramm durch eine Vorgabe von Distanz- oder Ähnlichkeitswerten in Gruppen zerfällt und in den Gruppen jeweils ein Prototyp gewählt wird und dass zum anderen zum Erkennen eines Objektes in einem digitalen Bild mit Objekten aus der Falldatenbank ein Fall als Fallbild mit einer Fallbeschreibung ausgewählt wird, wobei gleichzeitig eine Bildfolge als eine Pyramide mit Bildebenen des Fallbildes erzeugt wird, ein Gradientenbild des aktuellen digitalen Bildes erzeugt und in eine Bildfolge als eine Pyramide mit Bildebenen überführt wird, das Fallbild sukzessive auf jedes Objektbild des Gradientenbildes beginnend mit den höchsten Bildebenen verschoben wird, wobei das Fallbild mit jedem Objektbild des Gradientenbildes verglichen und dabei gleichzeitig die Ähnlichkeit durch Bestimmung von Ähnlichkeitsmaßen berechnet wird, und der Grad der Übereinstimmung zwischen Fallbild und Objektbild durch das Ähnlichkeitsmaß bestimmt ist.

**5.** Verfahren nach Patentanspruch 4, **dadurch gekennzeichnet, dass** die Translation jedes Falles so eleminiert wird, dass jeder Fall in den Ursprung eines Koordinatensystems verschoben wird, dass jeder Fall entsprechend der zugeordneten Daten in dem Koordinatensystem skaliert wird, dass jeweils mindestens zwei Fälle miteinander verglichen werden, dass die Fälle aufeinander ausgerichtet werden, wobei dabei eine Skalierung und/oder Rotation ausgeführt wird, dass dabei gleichzeitig die Ähnlichkeit berechnet wird, dass während der Berechnung der Ähnlichkeit die Ähnlichkeitsmaße entweder als Distanz- oder als Ähnlichkeitswerte jeweils zwischen den Fällen so lange ermittelt werden, bis entweder ein Minimum der Distanzwerte oder ein Maximum der Ähnlichkeitswerte vorhanden ist, dass aus den bestimmten Distanz- oder Ähnlichkeitswerten Mengen ähnlicher Fälle gebildet und hierarchisch als Dendrogramm geordnet werden und dass das Dendrogramm durch eine Vorgabe von Distanz- oder Ähnlichkeitswerten in Gruppen zerfällt und in den Gruppen jeweils ein Prototyp gewählt wird, wobei der Prototyp entweder eine aus den Einzelformen der Gruppe gemittelte Form oder der Median der Gruppe der Einzelformen ist.

**6.** Verfahren nach Patentanspruch 1 oder 4, **dadurch gekennzeichnet, dass** das Dendrogramm auf der Ähnlichkeitsskala entsprechend entweder wenigstens einer festgelegten und damit automatisch oder mindestens einer nutzerspezifischen Schwelle einmal geschnitten wird, so dass Gruppen entstehen, dass den Gruppen die Einzelformen zugeordnet werden, dass in den Gruppen jeweils ein Prototyp gewählt wird, wobei der Prototyp entweder eine aus den Einzelformen der Gruppe gemittelte Form oder der Median der Gruppe der Einzelformen ist, dass die gemittelte Form oder der Median der Gruppe auf einem oder dem Datensichtgerät abgebildet wird und dass die Konturpunkte der gemittelten Form oder des Medians als Datenmenge im Computer gespeichert werden.

7. Verfahren nach Patentanspruch 1 oder 4, **dadurch gekennzeichnet, dass** eine Reduzierung der mit dem Abfahren der Kanten gewonnenen Daten und damit der Punkte als den sichtbaren äußeren und/oder inneren Konturen durch Interpolation mit einem Polynom erfolgt.

8. Verfahren nach Patentanspruch 1 oder 4, **dadurch gekennzeichnet, dass** die Daten des Objektes so normiert werden, dass der Mittelpunkt des Objektes dem Koordinatenursprung 0, 0 entspricht.

9. Verfahren nach Patentanspruch 4, **dadurch gekennzeichnet, dass** aus der Falldatenbank ein Fallbild mit einer Fallbeschreibung ausgewählt wird, wobei nachfolgend oder gleichzeitig eine Bildfolge als eine Pyramide mit Bildebenen des Fallbildes erzeugt wird, dass ein Gradientbild des aktuellen digitalen Bildes erzeugt und in eine Bildfolge als eine Pyramide mit Bildebenen überführt wird, dass das Fallbild sukzessive auf jedes Objektbild des Gradientenbildes beginnend mit den höchsten Bildebenen verschoben wird, wobei das Fallbild mit jedem Objektbild des Gradientenbildes verglichen wird, dass das Fallbild auf das Objektbild ausgerichtet wird, wobei dabei eine Skalierung und/oder Rotation des Fallbildes ausgeführt wird, dass dabei gleichzeitig die Ähnlichkeit berechnet wird, dass während der Berechnung der Ähnlichkeit die Ähnlichkeitsmaße entweder als Distanz- oder als Ähnlichkeitswerte jeweils zwischen dem Fallbild und dem Objektbild so lange ermittelt werden, bis entweder ein Minimum der Distanzwerte oder ein Maximum der Ähnlichkeitswerte vorhanden ist und dass der Grad der Übereinstimmung zwischen Fallbild und Objektbild durch das Ähnlichkeitsmaß so bestimmt ist, dass der Grad der Übereinstimmung mit sinkendem Ähnlichkeitsmaß abnimmt und das Objektbild ungleicher vom Fallbild wird.

10. Verfahren nach Patentanspruch 4, **dadurch gekennzeichnet, dass** über eine Kantendetektion der Objekte des digitalen Bildes das Gradientenbild erzeugt wird, dass große Änderungen des Grauwertes sowohl in vertikaler als auch in horizontaler Richtung jeweils Gradienten zugeordnet werden und dass homogenen Flächen kein Gradient zugeordnet wird, so dass die homogenen Flächen schwarz sind.

11. Verfahren nach Patentanspruch 1 oder 4, **dadurch gekennzeichnet, dass** aus sowohl dem Fall- als auch dem Objektbild jeweils ein Gradientenbild gebildet wird, dass diese Gradientenbilder jeweils in eine Bildfolge als eine Pyramide mit Bildebenen überführt werden und dass sukzessive die Richtungsvektoren in den Bildebenen jeweils des Fall- und des Objektbildes durch Produktbildung miteinander verglichen werden.

12. Verfahren nach Patentanspruch 1 oder 4, **dadurch gekennzeichnet, dass** das Fallbild ein Prototyp aus den Einzelformen einer Gruppe entweder gemittelte Form oder der Median der Gruppe von Einzelfällen ist, wobei Gruppen Mengen ähnlicher als Dendrogramm geordnete Einzelfälle mit bestimmten Distanz- oder Ähnlichkeitswerten sind, und der ähnlichste Fall den Zweig des Dendrogramms bestimmt, oder dass das Fallbild ein Einzelbild eines Falles ist.

13. Verfahren nach Patentanspruch 1 oder 4, **dadurch gekennzeichnet, dass** der Richtungsvektor zwischen entweder zwei Punkten oder benachbarten Punkten der Kanten entweder bei dem Fallbild berechnet sind oder bei dem Objektbild berechnet werden und dass während der Berechnung der Ähnlichkeit die Ähnlichkeitsmaße als sowohl Richtungsvektoren als auch entweder als Distanz- oder als Ähnlichkeitswerte jeweils zwischen dem Fallbild und dem Objektbild ermittelt werden.

14. Verfahren nach Patentanspruch 1 oder 4, **dadurch gekennzeichnet, dass** über einen Index die Fälle entsprechend der Ähnlichkeitsrelationen so in der Falldatenbank geordnet sind, dass aus einer Menge entweder von Prototypen der ähnlichste Prototyp oder von Fällen der ähnlichste Fall schnell zum Objekt im Bild gefunden werden kann.

15. Verfahren nach Patentanspruch 1 oder 4, **dadurch gekennzeichnet, dass** die Berechnung der Ähnlichkeit

$$D(P,O) = \sum_{i=1}^{N} \left| \frac{(p_i - \mu_p)}{\delta_p} - R(\Theta) \frac{(o_i - \mu_o)}{\delta_o} \right|^2$$

P,O - Objekte

Θ - Rotationsmatrix

$\mu_p$ und $\mu_o$ - Mittelpunkte der Objekte P und O

$\delta_p$ und $\delta_o$ - Summen der Quadrate der Abstände jedes Punktes von den Mittelpunkten erfolgt.

16. Verfahren nach den Patentansprüchen 4 und 5, **dadurch gekennzeichnet, dass** der Grad der Übereinstimmung und damit die Gleichheit zwischen Fallbild und Objektbild durch das Ähnlichkeitsmaß bestimmt ist und einen Schwellwert darstellt und dass ein vom Fall ungleiches Objekt entweder abgelehnt oder als ein Fall mit dem Datensichtgerät dargestellt wird, so dass über eine manuelle Bestimmung und durch manuelles Abfahren von Kanten in Form sichtbarer äußerer und/oder innerer Konturen mit dem handführbaren und mit dem Computer verbundenen Eingabegerät diesen Kanten und damit dem Fall zuordenbare Daten gewonnen werden und dem Dendrogramm mit den bestimmten Fällen zugeordnet wird.

17. Computer-Programm mit einem Programmcode entweder zur Durchführung des Verfahrens zur Akquisition von Formen aus Bildern mit Abbildungen von Hep-2-Zellschnitten (1 bis 8) als Objekte und zum Lernen von abstrakten Formmodellen aus abgebildeten HEp-2-Zellen nach Anspruch 1 oder zur Durchführung des Verfahrens zur Akquisition von Formen aus Bildern mit Fällen und zum fallbasierten Erkennen von Objekten in digitalen Bildern nach Anspruch 4, wenn das Programm auf einem Rechner abläuft.

18. Computer-Programm-Produkt auf einem maschinenlesbaren Träger entweder zur Durchführung des Verfahrens zur Akquisition von Formen aus Bildern mit Abbildungen von HEp-2-Zellen als Objekte und zum Lernen von abstrakten Formmodellen aus Abbildungen von HEp-2-Zellschnitten (1 bis 8) nach Anspruch 1 oder zur Durchführung des Verfahrens zur Akquisition von Formen aus Bildern mit Fällen und zum fallbasierten Erkennen von Objekten in digitalen Bildern nach Anspruch 4, wenn das Programm auf einem Rechner abläuft.

**Claims**

1. A method for acquiring shapes from images with representations of HEp-2 cell sections in the form of objects and for learning abstract shape models from representations of HEp-2 cell sections for a case database for case-based recognition of HEp-2 cells in digital images, where data that can be assigned as objects to the HEp-2 cells represented is collected using a handheld input device that is connected to a computer by manually scanning the edges of an image in the form of visible outer and/or inner contours of HEp-2 cells, **characterized in that** the translation of each object is eliminated in such a way that each object is moved to the origin of a coordinate system, **in that** each object is scaled in said coordinate system according to the data assigned to it, **in that** at least two objects are compared with each other, **in that** said objects are brought into line with each other while a scaling and/or rotation process is performed, **in that** similarity is calculated at the same time, **in that**, during said similarity calculation, the similarity measures are determined between two objects either as distance or as similarity values until either a minimum of the distance values or a maximum of the similarity values exists, **in that** sets of similar objects are formed from specific distance and similarity values and are sorted hierarchically in the form of a dendrogram, and **in that** said dendrogram is divided into groups based on predefined distance or similarity values from which groups a prototype is selected, said prototype being a shape either averaged from the individual shapes of the group or the median of the group of individual shapes.

2. The method according to Claim 1, **characterized in that** said distance or similarity values unfold a distance or similarity matrix.

3. The method according to Claim 1, **characterized in that** said distance or similarity values are represented hierarchically using the single linkage method and a dendrogram.

4. A method for acquiring shapes from images with representations of HEp-2 cell sections in the form of cases and for case-based recognition of HEp-2 cells as objects in digital images where said shapes are acquired from images with cases and for learning abstract shape models from said cases for a case database by manually scanning the edges of each image with cases in the form of visible outer and/or inner contours using a handheld input device that is connected to a computer, and collecting data that can be assigned to said edges (or cases), **characterized in that** at least two cases are compared via a motion and scaling of each case, that the two cases are brought into line with each other while their similarity is calculated by determining similarity measures, sets of similar cases according to the similarity measures are created and sorted hierarchically in a dendrogram, said dendrogram being divided into groups by predefined distance or similarity values, and a prototype is selected in each group, and **characterized in that** a case is selected as a case image with a case description from the case database to detect an object in a digital image with objects while at the same time an image sequence is generated in the form of a pyramid with image planes of the case image, a gradient image of the current digital image is generated and transformed into an image sequence in the form of a pyramid with image planes, said case image is subsequently moved onto each object image of the gradient image starting with the highest image plane, said case image is compared with each object image of the gradient image and at the same time similarity is calculated by determining similarity measures, the degree of conformity between case image and object image being determined by the similarity measure.

5. The method according to Claim 4, **characterized in that** the translation of each case is eliminated in such a way that each case is moved into the origin of a coordinate system, that each case is scaled in the coordinate system based on assigned data, that the cases are brought into line while a scaling and/or rotation process is performed, that similarity is calculated simultaneously, **in that**, during said similarity calculation, the similarity measures are determined between the cases either as distance or as similarity values until either a minimum of the distance values or a maximum of the similarity values exists, **in that** sets of similar objects are formed from specific distance and similarity values and are sorted hierarchically in the form of a dendrogram, and **in that** said dendrogram is divided into groups based on predefined distance or similarity values from which groups a prototype is selected, said prototype being a shape either averaged from the individual shapes of the group or the median of the group of individual shapes.

6. The method according to Claim 1 or 4, **characterized in that** the dendrogram is intersected only once on the similarity scale based on either a defined threshold and thus automatically, or on a user-defined threshold so that groups are formed, that individual shapes are assigned to said groups, that a prototype is selected in each group, said prototype being a shape either averaged from the individual shapes of the group or the median of the group of individual shapes, that the averaged shape or the median of the group is represented on a or the visual display unit, and that the contour points of the averaged shape or median are stored as a set of data in the computer.

7. The method according to Claim 1 or 4, **characterized in that** a reduction of the data obtained by scanning the edges and of the points as the visible outer and/or inner contours is performed by interpolation with a polynomial.

8. The method according to Claim 1 or 4, **characterized in that** the data of the object are standardized in such a way that the center of the object matches the coordinate origin 0, 0.

9. The method according to Claim 4, **characterized in that** a case image with a case description is selected from the case database and, either subsequently or simultaneously, an image sequence of the case image is generated in the form of a pyramid with image planes, **in that** a gradient image of the current digital image is generated and transformed into an image sequence in the form of a pyramid with image planes, **in that** said case image is subsequently moved onto each gradient image starting with the highest image planes, **in that** said case image is compared with each object image of the gradient image, **in that** the case image is brought into line with the object image while a rotation and/or scaling process is performed on said case image, **in that** the similarity is calculated simultaneously, **in that**, during said similarity calculation, the similarity measures are determined between said case image and said object image either as distance or as similarity values until either a minimum of the distance values or a maximum of the similarity values exists, and **in that** the degree of conformity between case image and object image is determined by the similarity measure in such a way that the degree of conformity drops when the similarity measure drops and the object image becomes more different from the case image.

10. The method according to Claim 4, **characterized in that** the gradient image is created by means of an edge detection of the objects of the digital image, that greater changes in the grayscale value are assigned to a gradient both in vertical and horizontal directions, and that homogeneous areas are not assigned a gradient so that homogeneous areas appear black.

11. The method according to Claim 1 or 4, **characterized in that** a gradient image is generated both from the case and the object images, **in that** said gradient images are transformed into an image sequence in the form of a pyramid with image planes, and **in that** the direction vectors in the image planes of both the case and the object images are compared by multiplication.

12. The method according to Claim 1 or 4, **characterized in that** the case image is a prototype created from the individual shapes of a group either by averaging the shape or by determining the median of the group of individual cases, said groups being sets of similar individual cases sorted in the form of a dendrogram and having specific distance or similarity values, and **in that** the most similar case determines the branch of the dendrogram or that the case image is an individual image of a case.

13. The method according to Claim 1 or 4, **characterized in that** the direction vector is calculated either between two points or adjacent points of the edges of either the case image or the object image, and **in that**, during said calculation, the similarity measures between a case and an object image, respectively, are determined either as direction vectors or as distance or similarity values.

14. The method according to Claim 1 or 4, **characterized in that** the cases are sorted by means of an index in the case database according to their similarity relations that the most similar case to the object in the image can be quickly found from a set of either prototypes or cases.

15. The method according to Claim 1 or 4, **characterized in that** similarity is calculated as follows:

$$D(P,O) = \sum_{i=1}^{N} \left| \frac{(p_i-\mu_p)}{\delta_p} - R(\Theta) \frac{(o_i-\mu_o)}{\delta_o} \right|^2$$

P,O - objects
$\Theta$ - rotational matrix
$\mu_p$ and $\mu_o$ - centers of objects P and O
$\delta_p$ and $\delta_o$ - totals of the squares of the distances of each point from the centers

16. The method according to Claims 4 and 5, **characterized in that** the degree of conformity and thus similarity between case image and object image is determined by the similarity measure and represents a threshold value, and that an object that differs from the case is either rejected or represented as a case on the visual display unit so that data that can be assigned to said edges and thus to said case can be determined manually by scanning the edges in the form of visible outer and/or inner contours using a handheld input device that is connected to the computer, and that this data is assigned to the dendrogram with the specific cases.

17. A computer program with a program code, either for performing the method for acquiring shapes from images with representations of HEp-2 cell sections (1 to 8) in the form of objects and for learning abstract shape models from representations of HEp-2 cell sections according to Claim 1 or for performing the method for acquiring shapes from images with representations of HEp-2 cell sections in the form of cases and for case-based recognition of HEp-2 cells as objects in digital images according to Claim 4, if said program runs on a computer.

18. A computer program product on a machine-readable carrier, either for performing the method for acquiring shapes from images with representations of HEp-2 cell sections in the form of objects and for learning abstract shape models from representations of HEp-2 cell sections (1 to 8) according to Claim 1 or for performing the method for acquiring shapes from images with representations of HEp-2 cell sections in the form of cases and for case-based recognition of HEp-2 cells as objects in digital images according to Claim 4, if said program runs on a computer.

**Revendications**

1. Procédé pour l'acquisition de formes à partir d'images sur lesquelles figurent des coupes de cellule HEp2 sous forme d'objets, celles-ci servant à faciliter l'apprentissage concernant les différents modèles de forme abstraits des coupes de cellule HEp2 à regrouper dans une base données comparative, cette dernière ayant pour but la reconnaissance au cas par cas de cellules HEp2 sur des images numériques, en y obtenant sur chaque image, par balayage manuel des bords d'image visualisés sous forme de contours extérieurs et/ou intérieurs de cellules HEp2 effectué à l'aide d'une unité d'entrée opérée à main qui, elle, est connectée à un ordinateur, des données qui peuvent être assignées à ces bords d'image et, par conséquent, aux cellules HEp2 représentées sous forme d'objets; ce procédé étant **caractérisé par le fait que** la translation de chaque objet se voit éliminée de telle sorte que chaque objet est déplacé vers le point origine d'un système de coordonnées, qu'à chaque objet est attribué, en fonction des données assignées, une valeur d'échelle dans ce système de coordonnées, qu'au moins deux objets sont soumis à une comparaison entre eux lors de chaque opération, que ces objets sont alignés entre eux, ceci étant accompagné par un cadrage et/ou une rotation ainsi que d'un calcul de la similarité, que des valeurs de similarité son déterminées, en tant que valeurs de distance ou de similarité entre les objets, lors du calcul de la similarité, jusqu'à ce qu'on obtienne soit un minimum des valeurs de distance, soit un maximum des valeurs de similarité, que les valeurs de distance ou de similarité déterminées représentent des quantités similaires à celles des objets et que ces quantités sont disposées de façon hiérarchique dans un dendrogramme, et que ce dendrogramme se divise, sous l'effet de valeurs de distance ou de similarité présélectionnées, en plusieurs groupes et qu'il y est choisi un prototype dans chaque groupe, ce prototype constituant soit une forme moyenne des formes individuelles du groupe, soit la médiane du groupe des formes individuelles.

2. Procédé selon la revendication 1, **caractérisé par le fait que** les valeurs de distance ou de similarité donnent une matrice de distance ou de similarité.

3. Procédé selon la revendication 1, **caractérisé par le fait que** les valeurs de distance ou de similarité sont représentées au moyen de la méthode "single-linkage" et de façon hiérarchique dans un dendrogramme.

4. Procédé pour l'acquisition de formes à partir d'images sur lesquelles figurent des coupes de cellule HEp2 sous forme d'objets, celles-ci représentant des cas qui, eux, servent à la reconnaissance de cellules HEp2 visualisées sous forme d'objets sur des images numériques où, d'une part, on obtient sur chaque image visualisant de tels cas, par balayage manuel des bords d'image visualisés sous forme de contours extérieurs et/ou intérieurs de cellules HEp2 effectué à l'aide d'une unité d'entrée opérée à main qui, elle, est connectée à un ordinateur, des données qui peuvent être assignées à ces bords d'image et, par conséquent, aux différents cas; ce procédé étant **caractérisé par le fait qu'**au moins deux cas sont soumis, au moyen d'un déplacement et d'un cadrage, à une comparaison entre eux, que ces deux cas comparés sont alignés l'un à l'autre, ceci étant accompagné par le calcul de similarité qui, lui, est effectué suite à la détermination des valeurs de similarité, que des quantités de cas sont formées en fonction des valeurs de similarité et que ces quantités sont disposées de façon hiérarchique dans un dendrogramme, que ce dendrogramme se divise, sous l'effet de valeurs de distance ou de similarité présélectionnées, en plusieurs groupes et qu'il y est choisi un prototype dans chaque groupe, et où, d'autre part, avec pour but de reconnaître un objet sur une image numérique visualisant des objets de la base de données comparative, il est sélectionné un cas en sous forme d'image cas avec une description du cas concerné, et où est produite, de manière simultanée et sous forme d'une pyramide, une séquence d'images représentant des plans de l'image cas et une image de gradient de l'image numérique actuelle, ces deux images étant transformées en une séquence ayant la forme d'une pyramide et visualisant des plans d'image, que l'image cas est successivement déplacée et projetée, en commençant par les plans d'images situés dans la partie supérieure, sur chaque image objet de l'image de gradient, ceci étant accompagné d'une comparaison de l'image cas à chaque image objet de l'image de gradient et, suite à la détermination de valeurs de similarité, d'un calcul de la similarité, le degré de concordance entre l'image cas et l'image objet étant déterminé par la valeur de similarité.

5. Procédé selon la revendication 4, **caractérisé par le fait que** la translation de chaque objet se voit éliminée de telle sorte que chaque objet est déplacé vers le point origine d'un système de coordonnées, qu'à chaque objet est attribué, en fonction des données assignées, une valeur d'échelle dans ce système de coordonnées, qu'au moins deux objets sont soumis à une comparaison entre eux lors de chaque opération, que ces objets sont alignés entre eux, ceci étant accompagné par un cadrage et/ou une rotation ainsi que d'un calcul de la similarité, que des valeurs de similarité son déterminées, en tant que valeurs de distance ou de similarité entre les objets, lors du calcul de la similarité, jusqu'à ce qu'on obtienne soit un minimum des valeurs de distance, soit un maximum des valeurs de similarité, que les valeurs de distance ou de similarité déterminées représentent des quantités similaires à celles des objets et que ces quantités sont disposées de façon hiérarchique dans un dendrogramme, et que ce dendrogramme se divise, sous l'effet de valeurs de distance ou de similarité présélectionnées, en plusieurs groupes et qu'il y est choisi un prototype dans chaque groupe, ce prototype constituant soit une forme moyenne des formes individuelles du groupe, soit la médiane du groupe des formes individuelles.

6. Procédé selon la revendication 1 ou 4, **caractérisé par le fait que**, sur l'échelle de similarité, le dendrogramme est sectionné une fois, soit en fonction d'au moins un seuil prédéterminé et, par conséquent, de façon automatique, soit en fonction d'au moins un seuil spécifique de l'utilisateur, ceci générant des groupes auxquels sont attribués des formes individuelles, qu'il y est choisi un prototype dans chaque groupe, ce prototype constituant soit une forme moyenne des formes individuelles du groupe, soit la médiane du groupe des formes individuelles, que cette forme moyenne ou la médiane du groupe sont visualisés sur l'écran d'affichage et que les points de contour de la forme moyenne ou de la médiane du groupe sont mémorisés par l'ordinateur.

**7.** Procédé selon la revendication ou 4, **caractérisé par le fait que** les données obtenues par balayage des bords et, par conséquent, les points constituant les contours visibles extérieurs et/ou intérieurs, se voient réduire par l'interpolation d'un polynôme.

**8.** Procédé selon la revendication 1 ou 4, **caractérisé par le fait que** les données de l'objet sont normalisées de telle sorte que le point central de l'objet correspond au point origine 0,0 du système de coordonnées.

**9.** Procédé selon la revendication 4, **caractérisé par le fait qu'**il y est choisi une image cas dans la base de données comparative avec description du cas sélectionné, ceci étant suivi ou accompagné par la formation d'une séquence d'images ayant la forme d'une pyramide et représentant des plans de l'image cas, qu'une image de gradient est produite puis transformée en une séquence d'images ayant la forme d'une pyramide et représentant des plans d'image, que l'image cas est successivement déplacée et projetée, en commençant par les plans d'images situés dans la partie supérieure, sur chaque image objet de l'image de gradient, ceci étant accompagné d'une comparaison de l'image cas à chaque image objet de l'image de gradient, que l'image cas est alignée à l'image objet, ceci étant accompagné par un cadrage et/ou une rotation ainsi que d'un calcul de la similarité, que des valeurs de similarité son déterminées, en tant que valeurs de distance ou de similarité entre les objets, lors du calcul de la similarité, jusqu'à ce qu'on obtienne soit un minimum des valeurs de distance, soit un maximum des valeurs de similarité, soit un maximum des valeurs de similarité, et que le degré de concordance entre l'image cas et l'image objet est déterminé par la valeur de similarité , de telle sorte que ce degré de concordance dépend directement de la valeur de similarité, c'est-à-dire que lorsque la valeur de similarité est en baisse, le degré de concordance se voit réduit, ce qui fait que l'image objet devienne plus encore différente de l'image cas.

**10.** Procédé selon la revendication 4, **caractérisé par le fait qu'**une image de gradient est produite au moyen d'un balayage des bords des objets de l'image numérique, où de grandes modifications du niveau gris sont assignées, tant en direction horizontale que verticale, à des gradients, et où aucun gradient n'est assigné aux surfaces homogènes, ceci faisant que ces surfaces homogènes soient visualisées en noir.

**11.** Procédé selon la revendication1 ou 4, **caractérisé par le fait que**, chaque image cas et chaque image objet y forment une image de gradient, que ces images de gradient sont transformées en une séquence d'images ayant la forme d'une pyramide et représentant des plans d'image, et que les vecteurs indiquant la direction de chaque image cas et de chaque image objet sur le plans d'image sont successivement comparés entre eux au moyen d'une formation produits.

**12.** Procédé selon la revendication 1 ou 4, **caractérisé par le fait que** l'image cas constitue un prototype qui, lui, représente soit une forme moyenne des formes individuelles du groupe, soit la médiane du groupe des formes individuelles, que ces groupes constituent des quantités similaires aux cas individuels présentant des valeurs de distance et de similarité qui, elles, sont déterminées puis représentés dans le dendrogramme, où le cas le plus similaire détermine la branche du dendrogramme ou que l'image cas constitue une image individuelle d'un cas déterminé.

**13.** Procédé selon la revendication 1 ou 4, **caractérisé par le fait que** les vecteurs indiquant la direction de chaque image et situés entre deux points ou deux points contigus des bords sont calculés soit à partir de l'image cas, soit à partir de l'image objet, et que, lors du calcul de la similarité, les valeurs de similarité sont déterminées aussi bien en tant que vecteurs indiquant la direction les plans d' image que sous forme de valeurs de distance et de similarité entre chaque image cas et chaque image objet.

**14.** Procédé selon la revendication 1 ou 4, **caractérisé par le fait que** les cas sont disposés, au moyen d'un index et en fonction des rapports de similarité , dans la base de données comparative, de telle sorte qu'il est possible de localiser rapidement parmi une quantité de prototypes ou de cas, soit le prototype, soit le cas le plus similaire à l'objet de l'image.

**15.** Procédé selon la revendication 1 ou 4, **caractérisé par le fait que** le calcul de la similarité est effectué comme suit :

$$D\,(P,O) = \sum_{i=1}^{N} \left| \frac{(p_i - \mu_p)}{\delta_p} - R\,(\Theta)\, \frac{(o_i - \mu_o)}{\delta_o} \right|^2$$

P,O - objets
$\Theta$ - matrice de rotation
$\mu_p$ et $\mu_o$ - points centraux des objets P et O
$\delta_p$ et $\delta_o$ - sommes des carrés obtenus par les distances de chaque point du point central

**16.** Procédé selon la revendication 4 ou 5, **caractérisé par le fait que** le degré de concordance et, par conséquent, l'égalité entre l'image cas et l'image objet, est déterminé par la valeur de similarité, ce degré de concordance représentant une valeur seuil, et qu'un objet différent du cas est soit refusé, soit visualisé sur l'écran d'affichage, de sorte qu'on obtient, moyennant une détermination manuelle, c'est-à-dire par le balayage manuel des bords d'image visualisés sous forme de contours extérieurs et/ou intérieurs l'aide d'une unité d'entrée opérée à main qui, elle, est connectée à un ordinateur, des données qui peuvent être assignées tant à ces bords d'image qu'au dendrogramme représentant les cas déterminés.

**17.** Programme informatique muni d'un code programmé qui sert soit à effectuer le procédé pour l'acquisition de formes à partir d'images sur lesquelles figurent des coupes de cellule HEp2 (revendications 1 à 8) sous forme d'objets et à faciliter l'apprentissage concernant les différents modèles de forme abstraits de coupes de cellule HEp2 selon la revendication 1, soit à la réalisation du procédé pour l'acquisition de formes à partir d'images cas et à la reconnaissance au cas par cas d'objets visualisés sur des images numériques selon la revendication 4, lorsque le programme est exécuté sur un ordinateur.

**18.** Produit de programme informatique disponible sur support lisible par ordinateur qui sert soit à effectuer le procédé pour l'acquisition de formes à partir d'images sur lesquelles figurent des coupes de cellule HEp2 (revendications 1 à 8) sous forme d'objets et à faciliter l'apprentissage concernant les différents modèles de forme abstraits de coupes de cellule HEp2 selon la revendication 1, soit à la réalisation du procédé pour l'acquisition de formes à partir d'images cas et à la reconnaissance au cas par cas d'objets visualisés sur des images numériques selon la revendication 4, lorsque le programme est exécuté sur un ordinateur.

Fig. 1

Fig. 2

Fig. 3

**IN DER BESCHREIBUNG AUFGEFÜHRTE DOKUMENTE**

**In der Beschreibung aufgeführte Patentdokumente**

- DE 19616997 A1
- DE 4211904 A1
- DE 19639884 A1
- DE 19801400 C2
- EP 0665507 A1

**In der Beschreibung aufgeführte Nicht-Patentliteratur**

- Image mining: issues, framework, a general tool and its application to medical-image diagnosis. **PERNER P.** ENGINEERING APPLICATIONS OF ARTIFICIAL INTELLIGENCE. ELSEVIER, April 2002, vol. 15, 205-216
- Flexible Syntactic Matching of Curves and Its Application to Automatic Hierarchical Classification of Silhouettes. **GDALYAHU Y et al.** IEEE TRANSACTIONS ON PATTERN ANALYSIS ANS MACJ'HINE INTELLIGENCE. IEEE INC, Dezember 1999, vol. 21, 1312-1328